(19) **Europäisches Patentamt / European Patent Office / Office européen des brevets**

(11) **EP 1 189 370 B1**

(12) **FASCICULE DE BREVET EUROPEEN**

(45) Date de publication et mention
de la délivrance du brevet:
**14.03.2007 Bulletin 2007/11**

(51) Int Cl.:
*H04B 17/00* *(2006.01)*

(21) Numéro de dépôt: **01402354.3**

(22) Date de dépôt: **12.09.2001**

(54) **Puissance d'émission des symboles pilotes**

Sendeleistung für Pilot-Symbole

Pilot symbols transmission power

(84) Etats contractants désignés:
**AT BE CH CY DE DK ES FI FR GB GR IE IT LI LU
MC NL PT SE TR**

(30) Priorité: **14.09.2000 FR 0011834**

(43) Date de publication de la demande:
**20.03.2002 Bulletin 2002/12**

(73) Titulaire: **Mitsubishi Electric Information
Technology Centre
Europe B.V.
1119 NS Schiphol Rijk (NL)**

(72) Inventeurs:
• **Mottier, David,
Mitsubishi Electric Ite,
Immeuble
35700 Rennes (FR)**
• **Sälzer, Thomas,
Mitsubishi Electric Ite,
Immeuble
35700 Rennes (FR)**

(74) Mandataire: **Maillet, Alain
Cabinet le Guen & Maillet,
5, Place Newquay,
B.P. 70250
35802 Dinard Cedex (FR)**

(56) Documents cités:
• **PATENT ABSTRACTS OF JAPAN vol. 1995, no.
11, 26 décembre 1995 (1995-12-26) & JP 07 202973
A (MATSUSHITA ELECTRIC IND CO LTD), 4 août
1995 (1995-08-04)**
• **KAISER S ET AL: "Asynchronous spread
spectrum multi-carrier multiple access systems
with pilot symbol aided channel estimation"
GATEWAY TO 21ST CENTURY
COMMUNICATIONS VILLAGE. VTC 1999-FALL.
IEEE VTS 50TH VEHICULAR TECHNOLOGY
CONFERENCE (CAT. NO.99CH36324),
GATEWAY TO 21ST CENTURY
COMMUNICATIONS VILLAGE. VTC 1999-FALL.
IEEE VTS 50TH VEHICULAR TECHNOLOGY
CONFERENCE, AMSTERDAM,, pages 2701-2705
vol.5, XP002169390 1999, Piscataway, NJ, USA,
IEEE, USA ISBN: 0-7803-5435-4**

## Description

La présente invention concerne un procédé d'attribution d'un niveau de puissance d'émission à des symboles pilotes utilisés pour l'estimation du canal d'un système de transmission du type à multiporteuses à étalement du signal dans le domaine fréquentiel par séquences d'étalement, généralement dit système de transmission MC-CDMA (Multi-Carrier Coded Division Multiple Access) ou OFDM-CDMA (Orthogonal Frequency Division Multiplex - Code Division Multiple Access). Il peut également s'agir de système du type MC-CDM (Multi-Carrier Code Division Multiplex) ou MC-SS-MA (Multi-Carrier Spread-Spectrum Multiple Access).

Sont connues les méthodes d'estimation de canal à partir de symboles pilotes comme cela est décrit dans le résumé de la demande de brevet japonaise publiée sous la référence 07202979 ou dans la publication intitulée "Asynchronous Spread Spectrum Multi-carrier Multiple Access Systems with Pilot Symbol Aided channel estimation" de Stefan Kaiser et Witold A.Krzymien.

Parmi les systèmes de transmission permettant de gérer simultanément et dans une même bande de fréquence plusieurs communications entre des utilisateurs distincts se trouve la technique de transmission à porteuses multiples et à accès multiple par répartition de codes, plus connue sous le nom de technique MC-CDMA dont on peut trouver des descriptions dans l'article de S.Hara et R. Prasad intitulé "Overview of multicarrier CDMA" paru dans IEEE Communications magazine, vol.35, pp 126-133 de décembre 1997 ainsi que dans l'article de N. Yee et J.P. Linnartz intitulé "Wiener filtering of multicarrier CDMA in a Rayleigh fading channel" paru dans proceedings PIMRC '94, pp.1344-1347 de 1994.

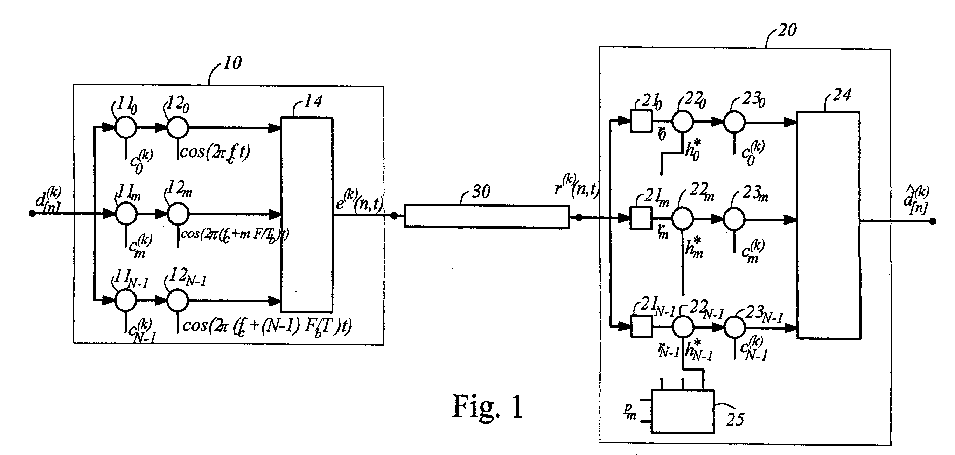

On a représenté schématiquement à la Fig. 1 un système de transmission du type MC-CDMA. Il comporte un émetteur 10 qui communique avec un récepteur 20 via un canal de propagation 30. Par exemple, si le canal 30 est un canal descendant d'un réseau de communication de mobiles, l'émetteur 10 est celui d'une station de base dudit réseau et le récepteur 20 est celui d'un mobile en communication avec ladite station de base. Si, inversement, le canal 30 est un canal montant d'un même réseau, alors l'émetteur 10 est celui d'un mobile et le récepteur 20 celui de la station de base.

Dans ce système MC-CDMA, la $n$-ième donnée, notée $d^{(k)}[n]$, du $k$-ième utilisateur est appliquée à l'entrée de chacun de multiplicateurs $11_0$ à $11_{N-1}$ pour y être multipliée par un élément $c_0^{(k)}$ à $c_{N-1}^{(k)}$ d'une séquence d'étalement propre à l'utilisateur k. La constante $N$ représente la longueur de la séquence d'étalement.

On suppose ici, pour simplification, que chaque utilisateur $k$ utilise une seule séquence d'étalement. Cependant, cela peut ne pas être le cas et ainsi plusieurs séquences d'étalement, voire toutes les séquences d'étalement, peuvent être affectées à un utilisateur. On notera que, dans ce dernier cas, bien qu'il ne s'agisse plus à proprement parlé d'accès multiple, le procédé selon la présente invention s'applique également.

Le résultat de chaque multiplication d'ordre $m$ est ensuite soumis à une modulation par une sous-porteuse de fréquence $(f_c + m.F/T_b)$, dans un modulateur $12_0$ à $12_{N-1}$. La valeur $F/T_b$ représente l'espacement entre deux sous-porteuses consécutives, $F$ étant un entier et $T_b$ étant la durée de la donnée $d^{(k)}[n]$ hors intervalle de garde. L'orthogonalité entre les sous-porteuses est garantie si celles-ci sont espacées de multiples de $F/T_b$.

On notera que cette opération de modulation revient à une multiplication par une expression de la forme $exp(j2\pi(f_c + m.F/T_b)t)$.

L'étalement est ainsi réalisé dans le domaine fréquentiel.

On notera encore que l'on suppose ici (en particulier à la Fig. 1), pour simplification, que la longueur de la séquence d'étalement $N$ est égale au nombre de sous-porteuses $M$, c'est-à-dire que les données de chaque utilisateur sont transmises de façon successive. Ce qui n'est pas nécessairement le cas.

Les signaux modulés sont alors sommés dans un sommateur 14 et émis sur le canal de propagation 30. Ainsi, une expression du signal émis hors intervalle de garde à chaque instant $t$, correspondant à la $n$-ième donnée du $k$-ième utilisateur, peut s'écrire :

$$e^{(k)}(n,t) = \begin{cases} d^{(k)}[n] \sum_{m=0}^{N-1} c_m^{(k)} \exp[j2\pi(f_o + m\frac{F}{T_b})t] & \text{si } t \subset [-T_b/2, T_b/2] \\ 0 & \text{sinon} \end{cases} \quad (1)$$

Afin de simplifier la description, on se place dans un contexte « voie descendante » où le canal de propagation est identique pour tous les utilisateurs. Pour simplifier la notation, les relations ci-dessous ne mentionnent pas l'indice $n$ des données transmises. De plus, on se place à l'instant $t = 0$.

Considérons alors la contribution $s_m$ sur chaque porteuse $m$ de données $d$ issues d'une station de base et destinées à $K$ utilisateurs (on suppose pour simplifier que chaque utilisateur n'utilise qu'une séquence d'étalement) :

$$s_m = \sum_{k=1}^{K} d^{(k)} c_m^{(k)} \tag{2}$$

Pratiquement, le canal de propagation 30 peut être obstrué par des habitations et autres obstacles situés entre l'émetteur 10 et le récepteur 20 et jouant le rôle de réflecteur pour les ondes transmises. Le signal émis se trouve alors propagé en trajets multiples, chacun des trajets étant différemment retardé et atténué. Le canal de propagation 30 peut également être soumis à d'autres perturbations. De manière générale, il agit alors comme un filtre dont la fonction de transfert $h(f,t)$ varie dans le temps.

Notons alors $h_m$ le coefficient de canal sur la porteuse $m$ au niveau du récepteur 20 de l'utilisateur considéré. Les coefficients de canal $h_m$ sont complexes, c'est-à-dire qu'ils peuvent s'exprimer sous la forme $h_m = \alpha_m \exp(-j\phi_m)$ où $\alpha_m$ est l'atténuation et $\phi_m$ la phase du coefficient.

Dans le cas synchrone, le signal reçu sur chaque sous-porteuse pour tous les $K$ utilisateurs peut alors s'écrire comme suit:

$$r_m = h_m \sum_{k=1}^{K} \left( d^{(k)} c_m^{(k)} \right) + n_m \tag{3}$$

où $n_m$ représente l'échantillon de bruit blanc additif gaussien sur la porteuse $m$.

Au niveau du récepteur 20, une détection est opérée pour pouvoir recouvrer, à partir du signal reçu $r_m$, la donnée émise $d^{(k)}[n]$.

On a représenté à la Fig. 1 un récepteur 20 qui applique une détection de type à Combinaison de Rapport Maximale (MRC = Maximum Ratio Combining). Le signal reçu $r^{(k)}(n,t)$ est préalablement fourni à des démodulateurs $21_0$ à $21_{N-1}$ qui délivrent alors des signaux démodulés $r_0$ à $r_{N-1}$. Chaque signal démodulé $r_m$ est appliqué à un premier multiplieur $22_m$ pour y être multiplié par le complexe conjugué $h_m^*$ du coefficient $h_m$ du canal de propagation 30 qui affecte la porteuse d'indice $m$ considérée puis à un second multiplieur $23_m$ pour y être multiplié par l'élément $c_m^{(k)}$ associé à cette porteuse d'indice $m$ du code d'étalement attribué à l'utilisateur $k$. Les signaux résultant sont ensuite sommés dans le sommateur 24 sur toutes les sous-porteuses, si bien que la variable de décision résultant de ce processus de détection est :

$$\hat{d}^{(k)} = \frac{1}{N} \sum_{m=0}^{N-1} h_m^* c_m^{(k)} r_m$$
$$= d^{(k)} + \frac{1}{N} \sum_{g=0, g \neq k}^{K-1} \sum_{m=0}^{N-1} |h_m|^2 d^{(g)} c_m^{(k)} c_m^{(g)} + \frac{1}{N} \sum_{m=0}^{N-1} c_m^{(k)} h_m^* n_m \tag{4}$$

La variable de décision contient donc trois termes : premièrement le symbole désiré, deuxièmement l'interférence avec les autres utilisateurs et troisièmement le bruit résiduel après recombinaison.

L'aptitude des systèmes de transmission MC-CDMA à assurer l'orthogonalité entre les signaux des différents utilisateurs dans le réseau dépend des propriétés d'intercorrélation des séquences d'étalement utilisées par ces utilisateurs.

On notera que ce processus de détection, à l'instar de tout processus de détection, nécessite la connaissance des coefficients du canal $h_m$. Dans l'équation (4) donnée ci-dessus, le coefficient $h_m$ du canal 30 est une estimation qui est censée être parfaite. Cependant, compte tenu du fait que le canal de propagation 30 a une fonction de transfert qui varie avec le temps et selon la fréquence de la porteuse considérée, une estimation des coefficients $h_m$ doit être faite à chaque instant $t$. Pour ce faire, certains symboles utiles $s_m$ de la trame émise par l'émetteur 10 sont remplacés par des symboles de valeur connue $p_m$, symboles généralement appelés "symboles pilotes".

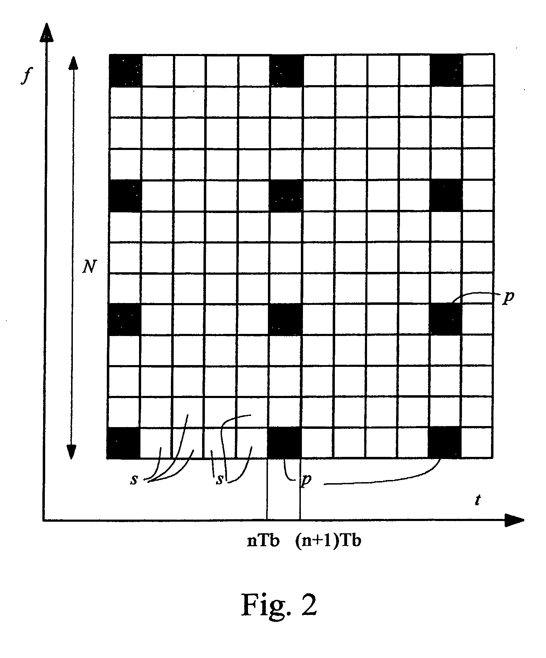

A la Fig. 2, est représentée une trame MC-CDMA. On voit qu'à chaque instant $nT_b$, un nouveau symbole MC-CDMA est transmis qui est constitué de $N$ symboles complexes transmis sur les $N$ sous-porteuses. Chaque symbole transmis est ici noté $s_m$ s'il s'agit de données utilisateurs et $p_m$ s'il s'agit de symboles pilotes. On notera que la distribution des symboles pilotes dans la trame MC-CDMA peut varier selon les propriétés statistiques du canal de propagation 30.

Comme cela est représenté à la Fig. 1, les symboles pilotes $p_m$ contenus dans la trame MC-CDMA sont analysés dans une unité d'estimation 25 que comporte le récepteur 20 et qui délivre, pour chaque position dans la trame MC-CDMA une estimation de chaque coefficient $h_m$, estimation que l'on notera par la suite $\hat{h}_m$.

Pour chaque position où se trouve un symbole pilote $p_m$, le coefficient estimé $\hat{h}_m$ peut être donné par la relation suivante :

$$\hat{h}_m = \frac{r_m}{p_m} = \frac{h_m \cdot p_m + n_m}{p_m} = h_m + \frac{n_m}{p_m} \qquad (5)$$

Pour ces mêmes positions, le coefficient estimé $\hat{h}_m$ peut aussi être déterminé en utilisant des moyens de lissage.

Les coefficients de canal pour des positions autres que les positions pilotes sont déterminés par des moyens d'interpolation, de lissage et de prédiction. Ainsi, quels que soient les moyens utilisés pour obtenir chaque coefficient de canal estimé $\hat{h}_m$, celui-ci est égal au coefficient $h_m$ lui-même auquel est ajouté un bruit $\eta_m$ qui dégrade l'estimation de canal et que l'on appelle ci-dessous bruit d'estimation de canal. Ainsi, chaque coefficient de canal estimé $\hat{h}_m$ peut, de manière générale, être exprimé de la façon suivante :

$$\hat{h}_m = h_m + \eta_m \qquad (6)$$

Si l'on remplace dans l'équation (4) ci-dessus la valeur du coefficient de canal $h_m$ par son estimation $\hat{h}_m$ ici calculée au moyen de la relation (6), on peut constater que le bruit d'estimation de canal cause une perturbation supplémentaire au niveau du processus de détection qui se traduit par une dégradation des performances de la transmission.

On peut montrer que, si l'on désigne par $\sigma_N^2$ la variance du bruit du canal $n_m$ au niveau des sous-porteuses et par $\sigma_\eta^2$ la variance du bruit d'estimation $\eta_m$ qui affecte les estimations des coefficients du canal, on peut alors écrire la relation suivante :

$$\sigma_\eta^2 = \frac{\sigma_N^2}{\gamma Q} \qquad (7)$$

où $Q$ est la puissance d'émission des symboles pilotes $p_m$, et $\gamma$ est un gain de lissage ($\gamma \geq 1$).

On rappelle que pour un bruit gaussien, la variance est également la puissance de ce bruit.

D'après cette relation, on voit que la variance $\sigma_\eta^2$ du bruit d'estimation de canal $\eta_m$ introduit par l'erreur d'estimation du canal dépend de la puissance d'émission $Q$ des symboles pilotes $p_m$. Par conséquent, plus la puissance d'émission $Q$ des symboles pilotes $p_m$ est élevée, plus faible est le bruit d'estimation de canal $\eta_m$. Ainsi, il pourrait être envisagé d'émettre les symboles pilotes $p_m$ à une puissance maximale afin d'améliorer l'estimation de canal. Cependant, une augmentation de la puissance des pilotes augmente la consommation globale de puissance du système, ce qui représente une perte en efficacité et un coût financier.

Par ailleurs, on peut également montrer que la perturbation entraînée par le bruit d'estimation de canal $\eta_m$ augmente avec le nombre d'utilisateurs $K$, et plus exactement avec le nombre de codes d'étalement attribués $K$, pour une puissance d'émission $Q$ des symboles pilotes donnée. Il en résulte que plus le nombre d'utilisateurs $K$ augmente, plus élevée devrait être la puissance d'émission des symboles pilotes.

Ainsi, l'importance de la perturbation supplémentaire est liée, d'une part, à la puissance d'émission des symboles pilotes notée $Q$ et, d'autre part, au nombre $K$ de séquences d'étalement utilisées.

Le problème auquel un opérateur doit apporter une solution consiste donc à dimensionner l'estimation de canal, et notamment la puissance $Q$ des pilotes, en fonction du nombre $K$ de séquences d'étalement utilisées par le système de communication. Plus précisément, l'opérateur doit pouvoir choisir la puissance des pilotes de manière à assurer que l'augmentation du rapport signal sur bruit compensant la dégradation des performances liée à une estimation de canal imparfaite ne dépend pas du nombre de séquences d'étalement utilisées.

Le but de l'invention est de proposer une méthode d'attribution de la puissance $Q$ d'émission des pilotes en fonction du nombre $K$ de séquences d'étalement utilisées qui garantisse que l'augmentation du rapport signal sur bruit compensant la dégradation des performances liée à une estimation de canal imparfaite ne dépend pas du nombre de séquences d'étalement utilisées.

A cet effet, un procédé de détermination de la puissance d'émission de symboles pilotes émis selon la présente invention est caractérisé en ce qu'il comporte les étapes suivantes :

a) déterminer un niveau de performance à atteindre par la transmission,
b) déduire, dudit niveau de performance à atteindre, le niveau de rapport signal sur bruit introduit par le canal,
c) déduire dudit niveau de rapport signal sur bruit, d'une part, la puissance $Q_0$ d'émission desdits symboles pilotes pour un unique code d'étalement attribué et, d'autre part, l'augmentation $\alpha$ de puissance qu'il est nécessaire d'apporter auxdits symboles pilotes pour les codes d'étalement attribués suivants, et
d) déterminer, à chacun des instants prédéterminés, en fonction du nombre de codes d'étalement utilisés à cet instant, la puissance $Q$ d'émission desdits symboles pilotes au moyen de la relation suivante :

$$Q = \alpha(K-1) + Q_0 \quad ; \; K \geq 1 \,, \alpha > 0 \; \text{et} \, Q_0 > \alpha$$

Selon une autre caractéristique de l'invention, pour déterminer ledit niveau de rapport signal sur bruit introduit par le canal, il comporte les étapes suivantes :

a) déduire, dudit niveau de performance à atteindre, le niveau de rapport signal sur bruit introduit par le canal correspondant pour une estimation de canal censée parfaite, et
b) augmenter ledit niveau de rapport signal sur bruit ainsi déduit d'une quantité prédéterminée qu'il est possible de tolérer pour compenser les dégradations du niveau de performance issues d'une estimation de canal imparfaite.

Dans la présente demande, on entend par exemple par niveau de performance, un taux d'erreurs binaires ou paquets.

Selon une autre caractéristique de l'invention, la puissance $Q_0$ d'émission desdits symboles pilotes pour un unique code d'étalement attribué et l'augmentation $\alpha$ de puissance qu'il est nécessaire d'apporter auxdits symboles pilotes pour les codes d'étalement attribués suivant sont déterminés de manière à maintenir le niveau de performance à atteindre identique à celui qui serait atteint en cas d'estimation parfaite.

Selon une autre caractéristique de l'invention, la puissance d'émission desdits symboles pilotes pour un unique code d'étalement attribué et l'augmentation de puissance qu'il est nécessaire d'apporter auxdits symboles pilotes pour les codes d'étalement attribués suivants sont déterminés au moyen des relations suivantes :

$$\alpha = \frac{1}{\gamma\lambda}$$

et

$$Q_0 = \frac{N\sigma_0^2 + 1}{\gamma\lambda(\lambda-1)} + \frac{1}{\gamma\lambda}$$

où $N$ est le nombre de porteuses mises en oeuvre dans ledit système de transmission MC-CDMA, $\gamma$ est le gain de lissage utilisé dans le processus de détection, $\lambda$ est un facteur représentatif de l'augmentation de rapport signal sur bruit du canal qu'il est possible de tolérer, $\sigma_0^2$ la variance de la perturbation totale prenant en compte, d'une part, le bruit introduit par le canal pour une estimation de canal censée parfaite et, d'autre part, l'erreur d'estimation de canal.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est une vue schématique d'un système de transmission MC-CDMA,
La Fig. 2 est une vue d'une trame d'un système de transmission MC-CDMA et,
La Fig. 3 montre un ensemble de courbes représentant les taux d'erreurs binaires BER en fonction du rapport signal à bruit Eb/No.

**[0041]** La présente description est faite en considérant un système de transmission MC-CDMA mais l'homme du métier comprendra qu'elle est tout à fait transposable à d'autres systèmes de transmission du type à multiporteuses à étalement du signal dans le domaine fréquentiel par séquences d'étalement.

Selon la présente invention, la relation entre la puissance $Q$ des pilotes $p_m$ et le nombre de codes d'étalement utilisés est alors la suivante :

$$Q = \alpha(K-1) + Q_0 \quad ; \; K \geq 1 \;, \alpha > 0 \; \text{et} \, Q_0 > \alpha \tag{8}$$

$Q_0$ est un paramètre correspondant à la puissance initiale des symboles pilotes qui est requise pour un seul utilisateur ($K = 1$) et dépend essentiellement de la perte de rapport signal sur bruit tolérée pour l'estimation de canal. Quant au paramètre $\alpha$, il est un facteur de proportionnalité qui s'applique lorsque le nombre d'utilisateurs est supérieur à 1.

On peut montrer, par analyse ou simulation, que cette relation (8) est valable pour la plupart des techniques de détection connues pour le système MC-CDMA, que ce soient des techniques pour un seul utilisateur (Single User Detection, SUD) ou des techniques multi-utilisateurs (Multiuser Detection, MUD).

Idéalement, les paramètres $Q_0$ et $\alpha$ sont liés à la technique de détection utilisée et seront déterminés pour chaque système MC-CDMA séparément.

On a cependant pu montrer que, pour la voie descendante d'un système MC-CDMA, la puissance initiale $Q_0$ est pratiquement indépendante de la technique de détection utilisée. Outre qu'il dépend de la perte de rapport signal sur bruit tolérée pour l'estimation de canal, il dépend également du facteur d'étalement $N$ et du gain de lissage $\gamma$.

Quant au facteur de proportionnalité $\alpha$, il dépend de la technique de détection et de la corrélation des coefficients du canal dans le domaine fréquentiel et temporel. Il dépend également, à l'instar de la puissance initiale $Q_0$, du facteur d'étalement $N$, de la perte tolérée pour l'estimation de canal $\lambda$, et du gain de lissage $\gamma$.

Les paramètres $Q_0$ et $\alpha$ peuvent être déterminés empiriquement, ou analytiquement.

Dans la suite de la description, on va donner une expression analytique de la puissance initiale $Q_0$ et du facteur de proportionnalité $\alpha$ dans le cas d'une détection de type MRC (Maximum Ratio Combining). On rappelle que dans ce cas, la variable de décision $\hat{d}^{(k)}$ à l'issue du processus de détection peut s'écrire sous la forme :

$$\tag{9}$$

$$\hat{d}^{(k)} = \frac{1}{N} \sum_{m=0}^{N-1} h_m^* c_m^{(k)} r_m$$

$$\simeq d^{(k)} + \frac{1}{N} \sum_{g=0,g\neq k}^{K-1} \sum_{m=0}^{N-1} |h_m|^2 d^{(g)} c_m^{(k)} c_m^{(g)} + \frac{1}{N} \sum_{m=0}^{N-1} c_m^{(k)} h_m^* n_m$$

Pour simplifier les équations qui suivent, on suppose que la puissance des données $d^{(k)}$ est normalisée et que le canal de propagation n'affecte pas la puissance du signal reçu (le canal 30 n'induit que des distorsions). On peut donc écrire :

$$E\left[d^{(k)}d^{(k)^*}\right]=1 \quad ; \quad \sum_{m=0}^{N-1}\left|h_m\right|^2 = 1 \tag{10}$$

Dans le cas d'une estimation du canal parfaite (notée par l'indice « CE parfaite »), on peut considérer la perturbation qui affecte la variable de décision $d^{(k)}$ comme étant un bruit gaussien.

Compte tenu de ces hypothèses, on peut alors montrer que la variance totale, ou puissance, $\sigma^2_{CE,parfaite}$ de la perturbation qui affecte la variable de décision $\hat{d}^{(k)}$ est proportionnelle au nombre K d'utilisateurs et dépend de la variance du bruit introduit par le canal au niveau des sous-porteuses $\sigma^2_{N,parfaite}$ et ce, de la manière donnée par la relation suivante :

$$\sigma^2_{CE,\,parfaite} = \frac{1}{N}\left(K - 1 + \sigma^2_{N,parfaite}\right) \tag{11}$$

Pour tenir compte de l'impact d'une estimation de canal imparfaite sur la variable de décision, on remplace dans l'équation (4) ci-dessus, le coefficient de canal $h_m$ par son estimation $\hat{h}_m$ donnée par l'équation (6) ci-dessus. Deux termes s'ajoutent alors à la variable de décision $\hat{d}^{(k)}$ donnée par l'équation (4) ci-dessus. Ils représentent l'erreur d'estimation de canal $\Delta^{(k)}_{CE}$ qui est uniquement due à l'estimation du canal et qui représente l'interférence supplémentaire entre utilisateurs et le produit croisé des composants du bruit. Cette erreur d'estimation de canal $\Delta^{(k)}_{CE}$ peut alors s'écrire sous la forme de la relation suivante :

$$\Delta^{(k)}_{CE} = \frac{1}{N}\sum_{m=0}^{K-1} d^m \sum_{m=0}^{N-1} \eta_m^* h_m c_m^{(k)} c_m^{(g)} + \frac{1}{N}\sum_{m=0}^{N-1} \eta_m^* c_m^{(k)} n_m \tag{12}$$

On peut montrer que la variance totale $\sigma^2_{CE,imparfaite}$ de la perturbation affectant la variable de décision $\hat{d}^{(k)}$ tenant compte d'une estimation de canal imparfaite peut alors s'écrire :

$$\sigma^2_{CE,imparfaite} = \frac{1}{N}\left(K - 1 + \sigma^2_{N,imparfaite} + K\sigma^2_{\eta,imparfaite} + \sigma^2_{N,imparfaite}\,\sigma^2_{\eta,imparfaite}\right)$$

$$= \frac{1}{N}\left(K - 1 + \sigma^2_{N,imparfaite} + \frac{\sigma^2_{N,imparfaite}}{\gamma Q}(K + \sigma^2_{N,imparfaite})\right) \tag{13}$$

On sait par ailleurs que la variance $\sigma^2_{CE,imparfaite}$ du bruit introduit par le canal et affectant donc la variable de décision $\hat{d}^{(k)}$ est directement liée au taux d'erreurs binaires moyen *BER.*

Selon la présente invention, la puissance d'émission Q des symboles pilotes correspond à celle qui est nécessaire pour assurer l'égalité des variances d'estimation de canal $\sigma^2_{CE,parfaite}$ et $\sigma^2_{CE,imparfaite}$ respectivement dans

le cas d'estimation parfaite et dans le cas d'estimation imparfaite, ou, ce qui revient au même, à assurer l'égalité des taux d'erreurs dans les deux cas.

On va pratiquer de la manière suivante.

La première étape consiste à fixer comme niveau de performance à atteindre un taux d'erreurs binaires moyen souhaité, notamment selon l'application envisagée. Par exemple, assurer un service voix requiert un taux d'erreurs binaires de l'ordre de $10^{-3}$ alors qu'un service vidéo de type MPEG ne peut être garanti qu'à des taux d'erreurs binaires de l'ordre de $10^{-9}$.

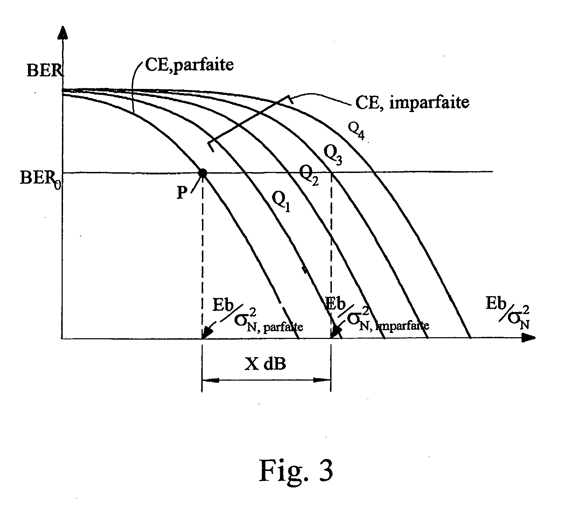

On a représenté à la Fig. 3 un ensemble de courbes représentant les taux d'erreurs binaires BER en fonction du rapport signal à bruit Eb/No respectivement dans le cas d'une estimation de canal parfaite et dans plusieurs cas d'estimation de canal imparfaite pour des puissances d'émission de symboles pilotes différentes $Q_1$ à $Q_4$. On a fait figurer sur cette Fig. 3 le taux d'erreurs souhaité $BER_0$.

Sur la courbe pour l'estimation de canal parfaite, on a représenté le point de fonctionnement P. A partir de ce point de fonctionnement P, on peut déterminer la variance $\sigma^2_{N,parfaite}$ du bruit correspondant. Cette détermination peut être faite graphiquement mais également parfois analytiquement par des méthodes connues de l'homme du métier

Au moyen de l'expression (11) ci-dessus, on peut déterminer une variance de perturbation totale $\sigma^2_{CE,parfaite}$ qui, en fonction de la variance $\sigma^2_{N,parfaite}$ précédemment déterminée, peut s'écrire :

$$\sigma^2_{CE,parfaite} = \frac{1}{N}\left(\sigma^2_{N,parfaite} + K - 1\right) \qquad (14)$$

On va poser :

$$\sigma^2_{CE,parfaite} = \sigma^2_0 \qquad (15)$$

Pour une estimation de canal imparfaite, le rapport signal sur bruit Eb/No doit être augmenté afin d'obtenir le même taux d'erreurs. On pose donc :

$$\sigma^2_{N,imparfaite} = \frac{\sigma^2_{N,parfaite}}{\lambda} \quad \text{avec } \lambda > 1 \qquad (16)$$

Le terme $\lambda$ représente la perte en rapport signal sur bruit tolérée pour une estimation imparfaite. Sur la Fig. 3, on a représenté sa valeur $X$ exprimée en décibel : $X = 10\log_{10}(\lambda)$.

Les variances des perturbations totales $\sigma^2_{CE,parfaite}$ et $\sigma^2_{CE,imparfaite}$ respectivement dans le cas d'une estimation parfaite et dans le cas d'une estimation imparfaite sont supposées égales à la variance de la perturbation totale $\sigma^2_0$. Elles satisfont donc les conditions suivantes :

$$\sigma^2_0 = \sigma^2_{CE,parfaite}\Big|_{\sigma^2_N = \sigma^2_{N,parfaite}} = \sigma^2_{CE,imparfaite}\Big|_{\sigma^2_N = \frac{\sigma^2_{N,parfaite}}{\lambda}} \qquad (17)$$

On peut montrer que la puissance $Q$ des pilotes requise pour que ces conditions soient respectées, compte tenu des équations précédentes, satisfait à la relation suivante

$$Q = \frac{1}{\gamma}\left(\frac{N\sigma_0^2 + 1}{\lambda^2 - \lambda} + \frac{1}{\lambda}K\right) \quad ; \lambda > 1 \tag{18}$$

On constate alors que les coefficients $\alpha$ et $Q_0$ peuvent s'écrire de la manière suivante :

$$\alpha = \frac{1}{\gamma\lambda} \quad \text{et}$$

$$\tag{19}$$

$$Q_0 = \frac{N\sigma_0^2 + 1}{\gamma\lambda(\lambda - 1)} + \frac{1}{\gamma\lambda}$$

On notera que cette relation a été déterminée dans le cas d'un système de transmission MC-CDMA mais on comprendra également qu'elle reste applicable à d'autres systèmes de transmission du type multiporteuses à étalement du signal dans le domaine fréquentiel par séquences d'étalement.

**Revendications**

1. Procédé de détermination de la puissance d'émission de symboles pilotes émis, en remplacement de signaux utiles, dans une trame de transmission d'un système de transmission multi-porteuses à étalement du signal dans le domaine fréquentiel par séquences d'étalement du type OFDM-CDMA, MC-CDMA, MC-CDM ou MC-SS-MA, lesdits symboles pilotes étant utilisés pour estimer les coefficients de canal, **caractérisé en ce qu'**il comporte les étapes suivantes :

   a) déterminer un niveau de performance à atteindre par la transmission,
   b) déduire, dudit niveau de performance à atteindre, le niveau de rapport signal sur bruit introduit par le canal, et
   c) déduire, en fonction dudit niveau de rapport signal sur bruit, d'une part, la puissance d'émission desdits symboles pilotes pour un unique code d'étalement attribué et, d'autre part, l'augmentation de puissance qu'il est nécessaire d'apporter auxdits symboles pilotes pour les codes d'étalement attribués suivants, et
   d) déterminer, à chacun des instants prédéterminés, en fonction du nombre de codes d'étalement utilisés à cet instant la puissance $Q$ d'émission desdits symboles pilotes au moyen de la relation suivante :

   $Q = \alpha(K - 1) + Q_0$ ; $K \geq 1$, $\alpha > 0$ et $Q_0 > \alpha$ où $Q_0$ est un paramètre correspondant à la puissance initiale des symboles pilotes pour un utilisateur, $\alpha$ est un facteur de proportionnalité lorsque le nombre $K$ d'utilisateurs est supérieur à 1.

2. Procédé de détermination de la puissance d'émission de symboles pilotes selon la revendication 1, **caractérisé en ce que**, pour déterminer ledit niveau de rapport signal sur bruit introduit par le canal, il comporte les étapes suivantes :

   b.a) déduire, dudit niveau de performance à atteindre, le niveau de rapport signal sur bruit introduit par le canal correspondant pour une estimation de canal censée parfaite, et
   b.b) augmenter ledit niveau de rapport signal sur bruit ainsi déduit d'une quantité prédéterminée qu'il est possible de tolérer pour compenser les dégradations du niveau de performance issues d'une estimation de canal imparfaite.

3. Procédé de détermination de la puissance d'émission de symboles pilotes selon la revendication 1 ou 2, **caractérisé en ce que** la puissance d'émission desdits symboles pilotes pour un unique code d'étalement attribué et l'augmentation de puissance qu'il est nécessaire d'apporter auxdits symboles pilotes pour les codes d'étalement attribués suivant sont déterminés de manière à maintenir un niveau de performance identique à celui qui serait atteint en cas d'estimation parfaite.

**4.** Procédé de détermination de la puissance d'émission de symboles pilotes selon une des revendications précédentes, **caractérisé en ce que** la puissance d'émission desdits symboles pilotes pour un unique code d'étalement attribué et l'augmentation de puissance qu'il est nécessaire d'apporter auxdits symboles pilotes pour les codes d'étalement attribués suivants sont déterminés au moyen des relations suivantes :

$$\alpha = \frac{1}{\gamma\lambda}$$

et

$$Q_0 = \frac{N\sigma_0^2 + 1}{\gamma\lambda(\lambda - 1)} + \frac{1}{\gamma\lambda}$$

où $N$ est le nombre de porteuses mises en oeuvre dans ledit système de transmission MC-CDMA, $\gamma$ est un gain de lissage utilisé dans le processus de détection, $\lambda$ est un facteur représentatif de l'augmentation de rapport signal sur bruit du canal qu'il est possible de tolérer, $\sigma_0^2$ la variance de la perturbation totale prenant en compte, d'une part, le bruit introduit par le canal pour une estimation de canal censée parfaite et, d'autre part, l'erreur d'estimation de canal.

**Claims**

**1.** Process of determining the transmission power of pilot symbols transmitted, by replacing useful signals, in a transmission frame of a multi-carrier transmission system with a signal spread in the frequency domain by means of spreading sequences of the OFDM-CDMA, MC-CDMA, MC-CDM or MC-SS-MA type, the said pilot symbols being used to estimate the channel coefficients, **characterised in that** the said process includes the following stages

a) determining a performance level to be achieved by the transmission,
b) deducing, from the said performance level to be achieved, the level of the signal to noise ratio introduced by the channel, and
c) deducing, according to the said level of the signal to noise ratio, on the one hand, the transmission power of the said pilot symbols for a single attributed spread code and, on the other hand, the increase in power that has to be applied to the said pilot symbols for the following attributed spread codes, and
d) determining, at each of the predetermined moments, according to the number of spread codes used at that moment, the transmission power $Q$ of the said pilot symbols through the intermediary of the following equation:

$Q = \alpha(K - 1) + Q_0$ ; $K \geq 1$, $\alpha > 0$ and $Q_0 > \alpha$ where $Q_0$ is a parameter that corresponds to the initial power of the pilot symbols for one user, $\alpha$ is a factor of proportionality when the number $K$ of users is in excess of 1.

**2.** Process of determining the transmission power of pilot symbols according to claim 1, **characterised in that** in order to determine the said level of the signal to noise ratio introduced by the channel, the said process includes the following stages:

b.a) deducing, from the said performance level to be achieved, the level of the signal to noise ratio introduced by the corresponding channel for a channel estimation deemed to be perfect, and
b.b) increasing the said level of the signal to noise ratio deduced in this manner by a predetermined quantity that it is tolerable in order to compensate for the degradations in the performance level resulting from an imperfect channel estimation.

**3.** Process of determining the transmission power of pilot symbols according to claim 1 or 2, **characterised in that** the transmission power of the said pilot symbols for a single attributed spread code and the increase in power that has to be applied to the said pilot symbols for the following attributed spread codes are determined so as to maintain a level of performance identical to that which would be achieved in the case of perfect estimation.

4. Process of determining the transmission power of pilot symbols according to one of the preceding claims, **characterised in that** the power transmission of the said pilot symbols for a single attributed spread code and the increase in power that has to be applied to the said pilot symbols for the following attributed spread codes are determined through the intermediary of the following equations:

$$\alpha = \frac{1}{\gamma\lambda}$$

and

$$Q_0 = \frac{N\sigma_0^2 + 1}{\gamma\lambda(\lambda - 1)} + \frac{1}{\gamma\lambda}$$

where **N** is the number of carriers implemented in the said MC-CDMA transmission system, $\gamma$ is the smoothing gain used in the detection process, $\lambda$ is a factor representing the increase in the signal to noise ratio of the channel that is tolerable, $\sigma_0^2$ is the variance in the total interference taking into account, on the one hand, the noise introduced by the channel for a channel estimation that is deemed to be perfect and, on the other hand, the channel estimation error.

## Patentansprüche

1. Verfahren zum Bestimmen der Sendeleistung von Pilotsymbolen, die durch Ersetzen von Nutzsignalen in einem Sendeblock eines Mehrfachträgersendesystems mit Signalspreizung im Frequenzbereich mittels Spreizsequenzen vom Typ OFDM-CDMA, MC-CDMA, MC-CDM oder MC-SSMA gesendet werden, wobei die Pilotsymbole zur Schätzung der Kanalkoeffizienten verwendet werden, **dadurch gekennzeichnet, dass** es die folgenden Schritte umfasst:

a) Bestimmen eines durch das Senden zu erzielenden Leistungspegels,
b) aus dem zu erzielenden Leistungspegel Ableiten des Pegels des von dem Kanal eingeführten Signal-zu-Rausch-Verhältnisses,
c) abhängig von dem Pegel des Signal-zu-Rausch-Verhältnisses Ableiten einerseits der Sendeleistung der Pilotsymbole für einen zugeordneten eindeutigen Spreizcode und andererseits der Leistungserhöhung, die für die folgenden zugeordneten Spreizcodes auf die Pilotsymbole angewendet werden muss, und
d) zu jedem der vorgegebenen Zeitpunkte Bestimmen der Sendeleistung $Q$ der Pilotsymbole abhängig von der Anzahl der zu diesem Zeitpunkt verwendeten Spreizcodes mittels der folgenden Gleichung :

$$Q = \alpha(K\text{-}1) + Q_0; \ K \geq 1, \ \alpha > 0 \ \text{und} \ Q_0 > \alpha,$$

wobei $Q_0$ ein Parameter ist, der der Anfangsleistung der Pilotsymbole für einen Nutzer entspricht und $\alpha$ ein Proportionalitätsfaktor ist, wenn die Anzahl $K$ der Nutzer größer als 1 ist.

2. Verfahren zum Bestimmen der Sendeleistung von Pilotsymbolen nach Anspruch 1, **dadurch gekennzeichnet, dass** es zum Bestimmen des Pegels des von dem Kanal eingeführten Signal-zu-Rausch-Verhältnisses folgende Schritte umfasst:

b.a) aus dem zu erzielenden Leistungspegel Ableiten des für eine fehlerfrei eingestufte Kanalschätzung von dem entsprechenden Kanal eingeführten Signal-zu-Rausch-Verhältnisses, und
b.b) Erhöhen des so abgeleiteten Signal-zu-Rausch-Verhältnisses um eine vorgegebene Größe, die toleriert werden kann, um die von einer nicht fehlerfreien Kanalschätzung ausgegebenen Verschlechterungen des Leistungspegels auszugleichen.

3. Verfahren zum Bestimmen der Sendeleistung von Pilotsymbolen nach Anspruch 1 oder 2, **dadurch gekennzeichnet, dass** die Sendeleistung der Pilotsymbole für einen zugeordneten eindeutigen Spreizcode und die Leistungserhöhung, die für die folgenden zugeordneten Spreizcodes auf die Pilotsymbole angewendet werden muss, so bestimmt werden, dass ein Leistungspegel erhalten wird, der identisch zu dem Leistungspegel ist, der bei fehlerfreier Schätzung erzielt werden könnte.

4. Verfahren zum Bestimmen der Sendeleistung von Pilotsymbolen nach einem der vorangehenden Ansprüche, **dadurch gekennzeichnet, dass** die Sendeleistung der Pilotsymbole für einen zugeordneten eindeutigen Spreizcode und die Leistungserhöhung, die für die folgenden zugeordneten Spreizcodes auf die Pilotsymbole angewendet werden muss, mittels der folgenden Gleichungen bestimmt werden:

$$\alpha = \frac{1}{\gamma\lambda}$$

und

$$Q_0 = \frac{N\sigma_0^2 + 1}{\gamma\lambda(\lambda - 1)} + \frac{1}{\gamma\lambda}$$

wobei $N$ die Anzahl der in dem MC-CDMA-Sendesystem implementierten Trägerfrequenzen ist, $\gamma$ eine in dem Erfassungsprozess eingesetzte Nivellierungsverstärkung ist, $\lambda$ ein die Erhöhung des tolerierbaren Signal-zu-Rausch-Verhältnisses darstellender Faktor ist, $\sigma_0^2$ die zu berücksichtigende gesamte Störungsvarianz einerseits des von dem Kanal für eine fehlerfrei eingestufte Schätzung eingeführten Rauschens und andererseits der Fehler der Kanalschätzung ist.

Fig. 1

Fig. 2

Fig. 3